## Europäisches Patentamt

## European Patent Office

## Office européen des brevets

(19)

(11) Numéro de publication: **0 029 379**
**A1**

# DEMANDE DE BREVET EUROPEEN

(21) Numéro de dépôt: 80401567.5

(22) Date de dépôt: 03.11.80

(51) Int. Cl.³: **G 01 T 1/26,** H 01 L 31/08

(30) Priorité: 15.11.79 DE 2946108

(43) Date de publication de la demande: 27.05.81
**Bulletin 81/21**

(84) Etats contractants désignés: **FR GB NL SE**

(71) Demandeur: **THOMSON-CSF, 173, Boulevard Haussmann, F-75360 Paris Cedex 08 (FR)**

(72) Inventeur: **Heidrich, Karl, "THOMSON-CSF" SCPI 173, bld Haussmann, F-75360 Paris Cedex 08 (FR)**
Inventeur: **Ginzel, Lothar, "THOMSON-CSF" SCPI 173, bld Haussmann, F-75360 Paris Cedex 08 (FR)**

(74) Mandataire: **Thrierr, Francoise et al, "THOMSON-CSF"- SCPI 173, bld Haussmann, F-75360 Paris Cedex 08 (FR)**

(54) Détecteur de rayonnements X ou gamma notamment pour radiologie, appareil radiologique comportant un tel détecteur.

(57) Le détecteur selon l'invention concerne le domaine de la détection des photons X ou γ. Il est particulièrement adapté comme chambre de mesure en Radiologie Classique et comme détecteur en Scannographie.

Il comporte au moins un transformateur (4, 5) des photos X ou γ en photons lumineux et au moins un transformateur (1) des photons lumineux en signaux électriques représentatifs de l'énergie des photons X ou γ incidents. Le transformateur (4, 5) des photons X ou γ en photons lumineux, comporte une couche photoconductrice (5) et une couche électroluminescente (4) comprises entre deux électrodes (3, 6) lesquelles sont portées à un potentiel de polarisation (U). L'électrode (3) de transfert peut être constituée par une barrière de Shottky.

Le transformateur de photons lumineux en signaux (S) comprend une couche photosensible (1), comme une cellule photovoltaïque, sur un substrat (2).

## DETECTEUR DE RAYONNEMENTS X OU $\gamma$
## NOTAMMENT POUR RADIOLOGIE, APPAREIL RADIOLOGIQUE
## COMPORTANT UN TEL DETECTEUR

La présente invention concerne un détecteur de rayonnements X ou $\gamma$ notamment pour radiologie. Elle trouve application aussi bien comme chambre de mesure à très faible absorbtion que comme détecteur de rayonnements à haut rendement.

Il est connu dans l'art antérieur des détecteurs de photons X ou $\gamma$ qui comportent un élément scintillateur monté sur une cellule photodétectrice. L'élément scintillateur absorbe une part des photons X ou $\gamma$ et les transforment en photons lumineux dont une partie est absorbée par une cellule photodétectrice. Celle-ci fournit alors un signal électrique en relation avec l'intensité du faisceau de photons X ou $\gamma$ incidents avec un temps de réponse très court de l'ordre de la monoseconde.

La présente invention apporte une disposition particulière de détecteur qui améliore de beaucoup le rendement et donc le temps de réponse qui descend au niveau de la picoseconde.

Pour permettre une amélioration du rendement la DE - OS 26 22 655 propose une disposition en série de scintillateurs et de photodétecteurs. La sensibilité demeure faible pour un grand nombre d'éléments. Leur épaisseur rend inadéquat leur usage comme chambre de mesure entre un corps à examiner et un film radiographique par exemple. Le film conserve en effet une trace du détecteur.

La présente invention, pour une faible épaisseur, admet une bonne sensibilité qui la rend utilisable comme chambre de mesure. En effet elle comporte au moins un transformateur de rayonnements X ou $\gamma$ en lumière de la bande UV à la bande IR et au moins un transformateur de lumière en signal électrique. Le transformateur de rayonnements X ou $\gamma$ comporte au moins une couche photoconductrice et une couche électroluminescente comprises entre une électrode couvercle et une électrode de transfert entre lesquelles est appliquée une tension de polarisation. L'électrode de transfert est en communication avec le transformateur de lumière.

L'invention sera mieux comprise à l'aide de la description et des figures annexées qui sont :

- la figure 1 : un détecteur selon l'invention,

- la figure 2 : un appareil de radiographie comportant un détecteur selon l'invention,

- la figure 3 : un tomodensitomètre comportant un détecteur selon l'invention.

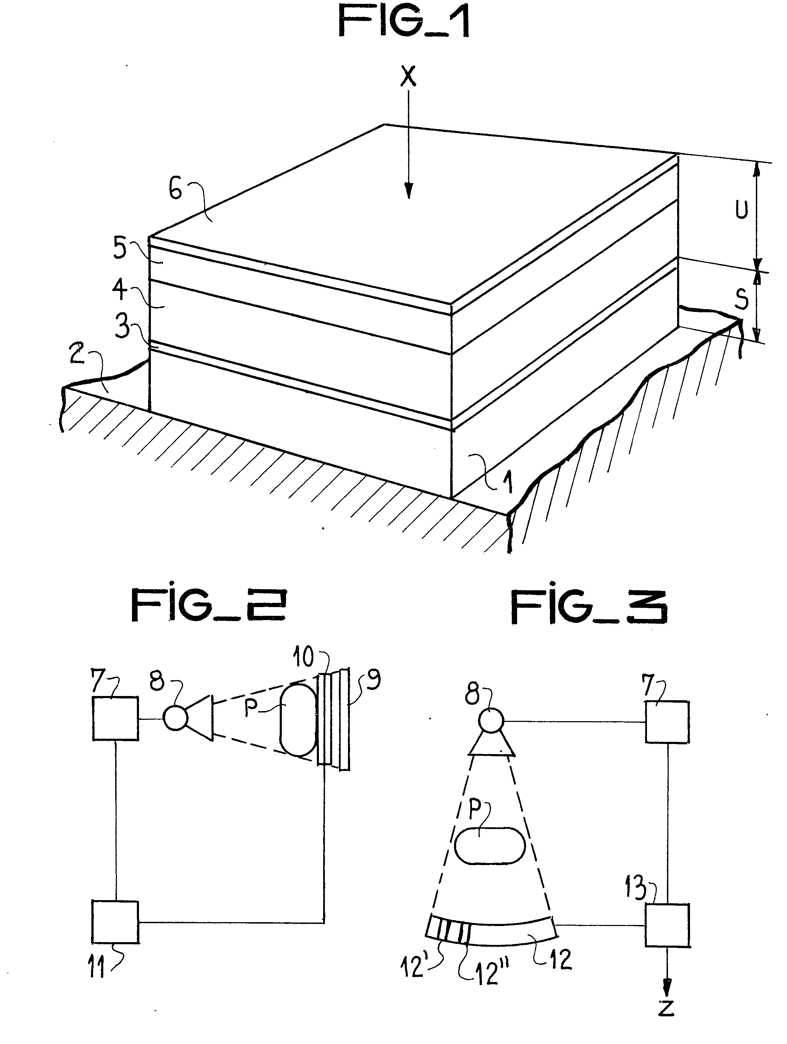

Le détecteur selon l'invention peut comporter, comme il a été représenté à la figure 1, un transformateur de rayonnements X ou $\gamma$ 4, 5 et un transformateur de lumière 1. Trois électrodes les limitent qui sont : l'électrode couvercle 6, une électrode de transfert 3 et une électrode support 2. Le rayonnement X ou $\gamma$ entre dans l'électrode couvercle 6 pour traverser successivement le transformateur de rayonnements 4, 5 puis le transformateur de lumière 1.

Le transformateur de rayonnements X ou $\gamma$ 4, 5 comporte une couche photoconductrice 5 et une couche électroluminescente 4 comprises entre l'électrode couvercle 6 et l'électrode de transfert 3. Quand un flux de photons X ou $\gamma$ atteint le transformateur de rayonnements 4, 5, il est peu absorbé. L'effet obtenu est très faible, pratiquement négligeable. Il convient d'appliquer entre l'électrode couvercle 6 et l'électrode de transfert 3, une tension de polarisation U d'une valeur prédéterminée en fonction des caractéristiques du transformateur de rayonnements. Les photons X ou $\gamma$ incidents traversent l'électrode couvercle 6 avec une très faible absorbtion. Cette électrode peut par exemple, être constituée d'une couche mince métallique déposée par évaporation. La couche photoconductrice 5, réalisée en un matériau semi-conducteur, reçoit les photons X ou $\gamma$. Soumise à une fraction prédéterminée du potentiel U elle délivre un flux de porteurs majoritaires qui traversent l'électrode de transfert 3. Pour atteindre cette électrode, le flux de porteurs doit traverser la couche électroluminescente qui émet alors un flux de photons de la bande de l'Ultraviolet UV à celle de l'Infra Rouge IR. Une fraction importante de ce flux traverse l'électrode de transfert 3 pour atteindre le transformateur de lumière 1. Ce transformateur comporte une couche photosensible par exemple un corps semi-conducteur qui réagit au flux de photons sous l'effet photovoltaïque. Ce dernier permet d'obtenir un signal avec une faible tension de bruit. Le signal émis S est mesuré entre l'électrode support 2 et l'électrode de transfert 3 qui limitent et isolent électriquement la couche photosensible 1 dite cellule photovoltaïque.

La fraction du flux de photons lumineux émis par la couche électroluminescente 4, renvoyée vers la couche photoconductrice 5, contribue peu à l'augmentation du flux de porteurs majoritaires, car l'énergie des photons lumineux est insuffisante.

Quand la couche électroluminescente 4 ainsi que la couche photosensible 1 sont réalisées en matériaux semi-conducteurs, l'électrode de transfert 3 est une barrière de Shottky. Dans le cas où la couche photosensible 1 est réalisée en une couche mince de silicium amorphe polycristallin, cette barrière peut être constituée d'une pellicule de platine de 100 Å. Il peut ainsi être réalisé un détecteur d'une épaisseur totale de 10 m.

Un tel détecteur peut être disposé comme cela a été représenté sur la figure 2 dans un appareil de radiologie comme chambre de mesure. La très faible absorbtion inhérente permet de situer le détecteur 10 selon l'invention entre le corps humain à examiner P et un dispositif producteur d'image 9. Le rayonnement est issu de la source 8 connectée à un générateur 7 commandable sous l'action d'un circuit de régulation 11 qui reçoit le signal détecté par le détecteur 10 selon l'invention. En radiographie, l'usage du détecteur selon l'invention comme chambre de mesure 10, permet de régler l'exposition de façon à limiter les contrastes admis par le film radiologique 9. En radioscopie, le même montage permet de protéger l'écran des doses excessives. La très faible épaisseur de la chambre de mesure 10 permet qu'elle ne laisse aucune trace sur le dispositif imageur 9.

4    0029379

Il est aussi possible de monter comme couche électroluminescente 4 une diode à jonction pn ou pin avec des diagrammes de
rayonnements prédéterminés. La couche photoconductrice 5 ainsi
que la couche photosensible 1 peuvent être constituées en diodes p - n.
Ceci permet d'améliorer la sensibilité.

Pour améliorer le rendement du détecteur, il est aussi possible
de superposer le long du trajet du rayonnement plusieurs séries de
transformateurs de rayonnement associés chacun à un transformateur de lumière. Chaque association peut être séparée de la
suivante par une couche électriquement isolante. Il est aussi possible
de réaliser un détecteur multiéléments, la face d'entrée du détecteur comportant plusieurs électrodes couvercles comme 6, qui
interceptent une section plus ou moins large du faisceau. Chaque
élément de détecteur est constitué du dispositif précédemment
décrit. Chaque signal de sortie S d'un élément correspond ainsi à une
caractéristique d'un faisceau fin de rayonnement. La dimension de la
section du faisceau le plus fin possible dépend donc de celle du plus
petit élément de détecteur possible.

Un détecteur multiéléments selon l'invention peut être monté
dans un tomodensitomètre schématiquement représenté à la figure
3. Une source de rayonnement 8 émet un faisceau plat en éventail
dudit rayonnement vers une coupe P du corps d'un patient à
examiner. Les rayons de faisceau aboutissent au détecteur 12
multiéléments. Ce détecteur 12 comprend plusieurs éléments 12',
12", ... placés côte à côte de façon à intercepter tout ou partie du
faisceau en éventail. Les signaux de sortie S du détecteur 12 sont
exploités dans un circuit 13 qui, d'une part peut commander un
générateur radiologique 7 qui alimente la source 8 tout en émission
où en direction, d'autre part fourni des signaux de données tomodensitométriques à une chaine Z de reconstruction d'image par processeur, selon des moyens et procédés connus.

Le détecteur 12 peut être en forme d'arc de cercle, la
reconstruction d'image d'une coupe exigeant une rotation de l'ensemble source 8 détecteur 12 autour de la section plane du corps P à examiner. Il peut aussi être en forme d'anneau circulaire au centre duquel est situé le patient P et à l'intérieur duquel tourne la source 8 de rayonnements.

La présente invention trouve application dans tout domaine de mesure des rayonnements photoniques X ou $\gamma$.

## REVENDICATIONS

1. Détecteur de rayonnements X ou $\gamma$, du type comportant au moins un transformateur de rayonnements X ou $\gamma$ en lumière de la bande UV à la bande IR et au moins un transformateur de lumière en signal électrique, caractérisé en ce que le transformateur de rayonnements X ou $\gamma$ en lumière de la bande UV à la bande IR (4, 5) comporte au moins une couche photoconductrice (5) et une couche électroluminescente (4) entre une électrode couvercle (6) et une électrode de transfert (3) entre lesquelles est appliquée une tension de polarisation.

2. Détecteur selon la revendication 1, caractérisé en ce que l'électrode (3) de transfert est constituée par une barrière de Shottky.

3. Détecteur selon la revendication 1 ou 2, caractérisé en ce que le transformateur de lumière en signal électrique est une cellule photovoltaïque (1).

4. Détecteur selon la revendication 1, caractérisé en ce que la couche photoconductrice (5) est un corps semi-conducteur.

5. Détecteur selon la revendication 4, caractérisé en ce que la couche photoconductrice (5) est une diode p - n.

6. Détecteur selon la revendication 4, caractérisé en ce que la couche photoconductrice (5) est une diode p - i - n.

7. Détecteur selon la revendication 1, caractérisé en ce que la couche électroluminescente (4) comporte une jonction p - n.

8. Détecteur selon la revendication 1, caractérisé en ce que la couche électroluminescente (4) comporte une jonction p - i - n.

9. Détecteur selon la revendication 3, caractérisé en ce que la cellule photovoltaïque (1) comporte un film constitué d'une couche amorphe polycristalline.

10. Détecteur selon la revendication 9, caractérisé en ce que la couche amorphe polycristalline est en silicium.

11. Détecteur selon la revendication 1, caractérisé en ce que le transformateur de rayonnement (4, 5) puis le transformateur de lumière (1) sont placés successivement l'un derrière l'autre dans la marche du rayonnement.

12. Détecteur selon l'une des revendications précédentes, caractérisé en ce qu'il comporte une série de transformateurs de rayonnement (4, 5) alternés avec des transformateurs de lumière le long du trajet du rayonnement, chaque association étant séparée de la suivante par une couche électriquement isolante et conductrice du rayonnement (2).

13. Détecteur selon l'une des revendications précédentes, caractérisé en ce qu'il comporte une pluralité d'éléments détecteurs, de façon à intercepter une section du faisceau de rayonnements, chacun des éléments comprenant au moins un transformateur de rayonnements (4, 5) et au moins un transformateur de lumière (1).

14. Appareil de radiographie, caractérisé en ce qu'il comporte un détecteur (10) de rayonnement (12) selon l'une des revendications précédentes, utilisé en tant que chambre de mesure, constitué par des transformateurs en films minces et placés entre le corps (P) à examiner et un dispositif imageur (9) sur le trajet du rayonnement issu d'une source (8) réglée par un générateur radiologique (7) qui reçoit des commandes d'un circuit de régulation (11) destiné à limiter l'exposition du dispositif imageur (9).

0029379

# FIG_1

# FIG_2  FIG_3

Office européen
des brevets

**RAPPORT DE RECHERCHE EUROPEENNE**

Numéro de la demande

0029379

EP 80 40 1567

## DOCUMENTS CONSIDERES COMME PERTINENTS

| Catégorie | Citation du document avec indication, en cas de besoin, des parties pertinentes | Revendica-tion concernée |
|---|---|---|
| | US - A - 3 058 002 (Y.T. SIHVONEN)<br>    * Figures 1,2 *<br><br>-- | 1,11,<br>12 |
| | DE - B - 1 017 709 (SIEMENS-REI-NINGER WERKE AKTIENGESELLSCHAFT)<br>    * Colonne 1, lignes 1-32; figures 1,3 *<br><br>-- | 1,14 |
| | DE - A - 1 439 687 (TELEFUNKEN PA-TENTVERWERTUNGS GmbH)<br>    * Revendication 3 *<br><br>-- | 4,5,7 |
| | GB - A - 1 154 782 (STANDARD TELE-PHONES AND CABLES LIMITED)<br>    * Revendication 1 *<br><br>-- | 4,5, |
| | FR - A - 2 345 810 (RCA CORPORATION)<br>    * Page 1 *<br><br>-- | 3,4,10 |
| | US - A - 3 978 333 (E. CRISMAN et al.)<br>    * Abrégé *<br><br>-- | 3,9,10 |
| | FR - A - 2 352 311 (SIEMENS AKTIEN-GESELLSCHAFT)<br>    * Figures 2-4 *<br>& DE - A - 2 622 655<br><br>-- | 1,11-<br>13 |

./.

**CLASSEMENT DE LA DEMANDE** (Int. Cl.³)

G 01 T   1/26
H 01 L 31/08

**DOMAINES TECHNIQUES RECHERCHES** (Int. Cl.³)

G 01 T   1/26
H 01 L 31/08
H 05 G   1/44

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 20-02-1981 | ARMSPACH |

OEB Form 1503.1   06.78

**Office européen** **des brevets**

**RAPPORT DE RECHERCHE EUROPEENNE**

Numéro de la demande

**0029379**

EP 80 40 1567

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | FR - A - 2 320 561 (CALIFORNIA IN-STITUTE OF TECHNOLOGY) <br><br> * Revendications 1,3 * <br><br> ---- | 1,3,14 | |
| | | | **DOMAINES TECHNIQUES RECHERCHES (Int. Cl. ³)** |

OEB Form 1503.2 06.78